# EUROPEAN PATENT APPLICATION

(11) **EP 1 808 459 A1**
(43) Date of publication of application: **18.07.2007**
(21) Application number: 05805346.3
(22) Date of filing: 28.10.2005
(51) Int. Cl.: C08L 23/28, C08K 5/29, C08K 5/521, C09D 11/02, C09D 123/28

(54) **RESIN COMPOSITION, COATING MATERIAL, RESIN SOLUTION, URETHANE RESIN COATING MATERIAL, ADHESIVE AND PRINT INK**

(30) Priority: 02.11.2004 JP 2004318850
(71) Applicant: FRONT LABORATORY Co., Ltd., Higashiosaka-shi Osaka, 5770849 (JP)
(72) Inventor: YOSHIKAWA, Shinichi, c/o FRONT LABORATORY Co. Ltd., Higashiosaka-shi Osaka 5770849 (JP); SAKAGUCHI, Yoshinary, c/o FRONT LABORATORY Co. Ltd, Higashiosaka-shi Osaka 5770849 (JP); FUNATSU, Shigeyoshi, c/o FRONT LABORATORY Co. Ltd., Higashiosaka-shi Osaka 5770849 (JP)
(74) Representative: Hollatz, Christian
(86) International application number: PCT/JP2005/019925
(87) International publication number: WO 2006/049106

(57) **Abstract**

Disclosed herein is a resin composition to be used for improving adhesion to the surface of synthetic resins, especially polyolefin-based resins. The resin composition comprises 100 parts by weight of chlorinated polyolefin with a chlorine content of 10 to 50 % by weight, 0.01 to 10 parts by weight of tris(isocyanatephenyl)thiophosphate, and 2 to 40 parts by weight of an organic diisocyanate compound. By adding the resin composition to general-purpose paints, it is possible to obtain paints capable of forming resin coated films excellent in adhesion to the surface of synthetic resins, especially polyolefin-based resins.

## Description

### TECHNICAL FIELD

The present invention relates to a resin composition to be used for improving adhesion to the surface of synthetic resins, especially olefin-based resins, and resin solution, paint, adhesive, and printing ink using such a resin composition.

### BACKGROUND ART

In the present day, synthetic resins are widely used for various applications such as automotive parts, electric products, and building materials because synthetic resins can be produced with high productivity, can be easily formed into various shapes, and are light in weight and highly anticorrosive. Particularly, olefin-based resins such as ethylene-based resins and propylene-based resins are widely used for various applications including the above-mentioned applications because they have excellent moldability, chemical resistance, and electrical insulation properties.

However, unlike synthetic resins having polarity, such as urethane-based resins and acrylic-based resins, olefin-based resins are nonpolar and crystalline, and therefore involve a problem that it is difficult to apply surface coatings thereto or to obtain good adhesion to the surface thereof.

In order to solve the above problem, Patent Document 1 proposes a coating composition obtained by polymerizing an acrylic-based monomer containing 70 % by weight or more of methyl methacrylate in the presence of chlorinated polyolefin with a chlorination degree of 20 to 40 in a weight ratio of the acrylic-based monomer to the chlorinated polyolefin within a predetermined range.

However, a coated film of the coating composition is poor in flexibility and adhesion to olefin-based resins, and therefore there is a problem that delamination is likely to occur.

Patent Document 1: Japanese Patent Laid-open No. S58-71966

### DISCLOSURE OF THE INVENTION

### PROBLEMS TO BE SOLVED BY THE INVENTION

The present invention relates to a resin composition to be used for improving adhesion to the surface of synthetic resins, especially olefin-based resins, and resin solution, paint, adhesive, and printing ink using the resin composition.

### MEANS FOR SOLVING THE PROBLEMS

The resin composition of the present invention comprises 100 parts by weight of chlorinated polyolefin with a chlorine content of 10 to 50 % by weight, 0.01 to 10 parts by weight of tris(isocyanatephenyl)thiophosphate, and 2 to 40 parts by weight of an organic diisocyanate compound.

Examples of polyolefin to be used as a base material of the chlorinated polyolefin with a chlorine content of 10 to 50 % by weight constituting the resin composition of the present invention include homopolymers of olefins having 2 to 10 carbon atoms such as ethylene, propylene, butylene, and hexene, copolymers of two or more of these olefins, and copolymers of one or more of these olefins and one or more monomers copolymerizable therewith. Among them, polypropylene is preferred. It is to be note that such a polyolefin may be modified by graft-polymerization with a monomer copolymerizable with the olefin mentioned above.

Examples of monomers copolymerizable with the olefins mentioned above include: unsaturated carboxylic acids such as acrylic acid, methacrylic acid, maleic acid, and fumaric acid; acid anhydrides such as maleic anhydride; acrylic esters such as methyl acrylate and ethyl acrylate; methacrylic esters such as methyl methacrylate and ethyl methacrylate; styrene; acrylonitrile; and methacrylonitrile. Among them, acid anhydrides are preferred, and maleic anhydride is more preferred.

The chlorination of the polyolefin is carried out by, for example, blowing chlorine gas into an organic solvent solution obtained by dissolving the polyolefin in an organic solvent or into an organic solvent dispersion liquid obtained by dispersing the polyolefin in an organic solvent.

The chlorine content of the chlorinated polyolefin is limited to 10 to 50 % by weight, and is preferably in the range of 14 to 40 % by weight, more preferably in the range of 20 to 30 % by weight. If the chlorine content of the chlorinated polyolefin is less than the above lower limit value, compatibility of a resultant resin composition with paints, adhesives, printing inks or the like is impaired. On the other hand, if the chlorine content of the chlorinated polyolefin exceeds the above upper limit value, heat resistance of a resultant resin composition is impaired so that if the resin composition is added to a paint, the paint cannot be subjected to baking. It is to be noted that the chlorine content of the chlorinated polyolefin is measured in accordance with JIS K 7229 "Determination of Chlorine in Chlorine-Containing Polymers (Oxygen Flask Combustion Method)".

As described above, the resin composition of the present invention also contains tris(isocyanatephenyl)thiophosphate represented by the structural formula 1:

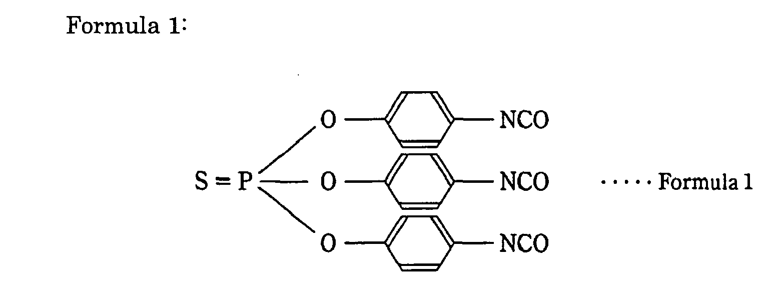

The tris(isocyanatephenyl)thiophosphate content of the resin composition is limited to 0.01 to 10 parts by weight per 100 parts by weight of the chlorinated polyolefin, and is preferably in the range of 0.5 to 5 parts by weight, more preferably in the range of 0.5 to 4 parts by weight. If the tris(isocyanatephenyl)thiophosphate content is less than the above lower limit value, the effect of improving adhesion to the surface of synthetic resins, especially olefin-based resins is not exhibited. On the other hand, if the tris(isocyanatephenyl)thiophosphate content exceeds the above upper limit value, the resin composition turns into a gel during storage.

Further, the organic diisocyanate compound constituting the resin composition of the present invention is not particularly limited as long as it contains two isocyanate groups. Examples of such an organic diisocyanate compound include isophorone diisocyanate, hexamethylene diisocyanate, tolylene diisocyanate, 1,5-naphthalene diisocyanate, 4,4'-diphenylmethane diisocyanate, 4,4'-dibenzyl diisocyanate, dialkyldiphenylmethane diisocyanate, tetraalkyldiphenylmethane diisocyanate, 1,3-phenylene diisocyanate, 1,4-phenylene diisocyanate, tolylene diisocyanate, butane-1,4-diisocyanate, 2,2,4-trimethylhexamethylene diisocyanate, 2,4,4-trimethylhexamethylene diisocyanate, tolidine diisocyanate, cyclohexane-1,4-diisocyanate, xylylene diisocyanate, dicyclohexylmethane-4,4'-diisocyanate, 1,3-bis(isocyanatemethyl)cyclohexane, and methylcyclohexane diisocyanate. Among them, 4,4'-diphenylmethane diisocyanate represented by the following formula 2 is preferred.

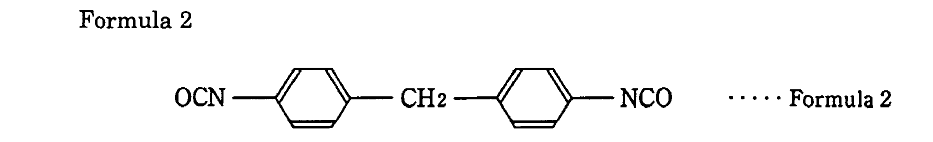

The organic diisocyanate compound constituting the resin composition of the present invention may be a polyurethane prepolymer with isocyanate groups at both ends obtained by reaction between the organic diisocyanate compound mentioned above and polyol such as acrylic polyol, alkyd polyol, polyester polyol or polyether polyol, or a modified product thereof, or a mixture of two or more of them.

Alternatively, the organic diisocyanate compound constituting the resin composition of the present invention may be an organic diisocyanate compound containing, as a main ingredient, a biuret or isocyanurate trimer of hexamethylene diisocyanate or an adduct of hexamethylene diisocyanate and trimethylolpropane.

The organic diisocyanate compound content of the resin composition is limited to 2 to 40 parts by weight per 100 parts by weight of the chlorinated polyolefin, and is preferably in the range of 3 to 30 parts by weight. If the organic diisocyanate compound content is less than the above lower limit value, the effect of improving adhesion to the surface of synthetic resins, especially olefin-based resins is not exhibited. On the other hand, the organic diisocyanate compound content exceeds the above upper limit value, the resin composition turns into a gel during storage.

The resin composition of the present invention can be obtained by dissolving the chlorinated polyolefin, the tris(isocyanatephenyl)thiophosphate, and the organic diisocyanate compound in a solvent. The solvent is not particularly limited as long as it can dissolve the chlorinated polyolefin, the tris(isocyanatephenyl)thiophosphate, and the organic diisocyanate compound. Examples of such a solvent include toluene, cyclohexane, dichloromethane, and ethyl acetate. It is to be noted that the resin composition of the present invention may be produced by separately dissolving these compounds in different solvents and then mixing resultant solutions together, or may be produced by adding these compounds to one solvent and dissolving them in the solvent.

The resin composition content of a resin solution obtained by dissolving the resin composition of the present invention in a solvent is preferably in the range of 10 to 40 % by weight, more preferably in the range of 15 to 25 % by weight. If the resin composition content is less than the above lower limit value, there is a case where it is necessary to use a large amount of the resin solution to obtain the effect of improving adhesion to the surface of synthetic resins, especially olefin-based resins so that the handleability of the resin composition is impaired. On the other hand, if the resin composition content exceeds the above upper limit value, there is a case where the viscosity of the resin solution is increased so that the handleability of the resin solution is impaired, or the resin composition cannot be completely dissolved in a solvent.

Next, a method for using the resin composition of the present invention will be described. The resin composition of the present invention can be added to general-purpose paints, printing inks, adhesives, and the like. Further, the resin composition of the present invention may be used with polyols to form urethane-based resin paints.

The paints to which the resin composition of the present invention is to be added are not particularly limited as long as they are general-purpose paints conventionally used. Examples of such paints include urethane-based resin paints, acrylic-based resin paints, cellulose derivative paints, alkyd resin paints, unsaturated polyester resin paints, amino resin paints, epoxy resin paints, phenol-based resin paints, and olefin-based resin paints. Among them, urethane-based resin paints and acrylic-based resin paints are preferred.

The urethane-based resin paints are not particularly limited as long as they are general-purpose urethane-based resin paints conventionally used. Examples of such urethane-based resin paints include those cured using a heat drying method, a room-temperature drying method, a vaporous amine penetration method, or a vaporous catalytic amine spraying method.

Specific examples of the urethane-based resin paints include two-part urethane resin paints comprising polyol and polyisocyanate and one-part moisture curing urethane resin paints typified by a polyisocyanate adduct of polyalkylene glycol (e.g., polyethylene glycol, polypropylene glycol).

Examples of polyols constituting the two-part urethane resin paints include acrylic polyol, alkyd polyol, polyester polyol and polyether polyol, modified products thereof, and mixtures of two or more of them.

Examples of polyisocyanates constituting the two-part urethane resin paints include tolylene diisocyanate (TDI), xylylene diisocyanate (XDI), isophorone diisocyanate (IPDI), diphenylmethane diisocyanate (MDI), polymeric MDI, tolidine diisocyanate (TODI), and naphthalene diisocyanate (NDI), hydrogenated products thereof, hexamethylene diisocyanate (HDI), lysine diisocyanate, and mixtures thereof.

The resin composition of the present invention may be used as polyisocyanate constituting a urethane-based resin paint. For example, polyurethane-based resin paints may be formed using the resin composition of the present invention and polyols widely used for forming urethane-based resin paints (e.g., the above-mentioned polyols).

The adhesives are not particularly limited as long as they are general-purpose adhesives. Examples of such adhesives include urea-based adhesives, melamine-based adhesives, phenol-based adhesives, resorcinol-based resin adhesives, epoxy-based resin adhesives, vinyl acetate-based resin adhesives, urethane-based resin adhesives, amide-based resin adhesives, vinyl chloride-based resin adhesives, polyvinyl alcohol-based resin adhesives, and acrylic-based resin adhesives.

The printing inks to which the resin composition of the present invention is to be added are not particularly limited as long as they are general-purpose printing inks. Examples of such printing inks include linseed oil ink, linseed oil varnish, security ink, liquid crystal capsule ink, web offset ink, gloss ink, fluorescent ink, gel varnish, extra varnish, ultra violet ray curing ink, soy ink, Delphi ink, color matching ink, letterpress ink, gravure ink, heat set ink, tinplate printing ink, flexographic ink, sheet-fed ink, UV ink, resist ink, olefin-based resin ink, rosin-modified phenol-based resin ink, urethane-based resin ink, maleic acid-based resin ink, styrene-maleic acid-based resin ink, and acrylic-based resin ink.

The paints, adhesives, and printing inks obtained by adding the resin composition of the present invention to general-purpose paints, adhesives, and printing inks, and the paints obtained by using the resin composition of the present invention are excellent in adhesion to synthetic resins, especially olefin-based resins. Examples of the synthetic resins include, but are not limited to, olefin-based resins such as ethylene-based resins, propylene-based resins, and ethylene-vinyl acetate copolymers (EVA); olefin-based thermoplastic elastomers; polyvinyl chloride; and polyester-based resins such as polyethylene terephthalate.

Examples of the ethylene-based resins include ethylene homopolymers and ethylene-α-olefin copolymers containing 50 % by weight or more of ethylene. Examples of the α-olefin include propylene, 1-butene, 1-pentene, 1-hexene, 4-methyl-1-pentene, 1-heptene, and 1-octene.

Examples of the propylene-based resins include propylene homopolymers and propylene-α-olefin copolymers containing 50 % by weight or more of propylene. Examples of the α-olefin include ethylene, 1-butene, 1-pentene, 1-hexene, 4-methyl-1-pentene, 1-heptene, and 1-octene.

The term "olefin-based thermoplastic elastomer" refers to one which exhibits rubber elasticity at room temperature, and which is plasticized at high temperature of 180°C or higher and therefore can be subjected to various types of mold processing. In general, the term "olefin-based thermoplastic elastomer" refers to one which has a molecular structure containing, as a rubber component (soft segment) having entropy elasticity, polyethylene, a copolymer of ethylene and a small amount of diene, or a partially cross-linked product thereof, and as a molecule-constraining component (hard segment) for preventing plastic deformation, polypropylene.

### EFFECT OF THE INVENTION

The resin composition of the present invention comprises 100 parts by weight of chlorinated polyolefin with a chlorine content of 10 to 50 % by weight, 0.01 to 10 parts by weight of tris(isocyanatephenyl)thiophosphate, and 2 to 40 parts by weight of an organic diisocyanate compound. By adding this resin composition to general-purpose paints, it is possible to obtain paints capable of forming resin coated films excellent in adhesion to the surface of synthetic resins, especially olefin-based resins.

Particularly, in a case where the organic diisocyanate compound constituting the resin composition is 4,4'-diphenylmethane diisocyanate, paints, adhesives, and printing inks to which the resin composition has been added are more suitable for use with synthetic resins, especially olefin-based resins.

Further, adhesives to which the resin composition of the present invention has been added exhibit excellent adhesion to synthetic resins, especially olefin-based resins. Also, printing inks to which the resin composition of the present invention has been added exhibit excellent adhesion to synthetic resins, especially olefin-based resins.

Furthermore, urethane-based resin paints comprising the resin composition of the present invention and polyol are capable of forming resin coated films excellent in adhesion to the surface of synthetic resins, especially olefin-based resins.

### BEST MODE FOR CARRYING OUT THE INVENTION

Hereinbelow, the present invention will be described more specifically with reference to the following Examples and Comparative Examples. It is to be noted that the present invention is not limited to these Examples.

### (Examples 1 to 8 and Comparative Examples 1 to 6)

A resin solution (i.e., a solution obtained by dissolving a resin composition in a solvent) was prepared by mixing a chlorinated polypropylene solution 1 ("Superchlon 892L" manufactured by Nippon Paper Industries Co., Ltd., chlorine content: 22 % by weight, chlorinated polypropylene 1: 20 % by weight, toluene: 56 % by weight, cyclohexane: 24 % by weight), a chlorinated polypropylene solution 2 ("Superchlon 851L" manufactured by Nippon Paper Industries Co., Ltd, chlorine content: 19 % by weight, chlorinated polypropylene 2: 20 % by weight, toluene: 56 % by weight, cyclohexane: 24 % by weight), or a chlorinated polypropylene solution 3 ("Hardlen CY-9122" manufactured by Toyo Kasei Kogyo Co., Ltd., chlorine content: 22 % by weight, chlorinated polypropylene 3: 20 % by weight, toluene: 80 % by weight) as chlorinated polyolefin, a tris(isocyanatephenyl)thiophosphate solution ("Desmodur RFE" manufactured by Bayer AG, tris(isocyanatephenyl)thiophosphate: 38 % by weight, ethyl acetate: 62 % by weight), and a 4,4'-diphenylmethane diisocyanate solution ("FRONT #303" manufactured by Fore Front, 4,4'-diphenylmethane diisocyanate: 38 % by weight, dichloromethane: 62 % by weight) or a modified polyisocyanate solution ("Coronate L" manufactured by Nippon Polyurethane Industry Co., Ltd., modified polyisocyanate: 75 % by weight, ethyl acetate: 25 % by weight) as an organic diisocyanate compound, in such a manner that the amounts of the compounds in the respective solutions are set at predetermined amounts (part by weight) shown in Table 1 or 2, and uniformly stirring the resulting mixture.

Each of the raw materials of the resin solution described above was prepared by dissolving a compound in a solvent. More specifically, the chlorinated polypropylene solution 1 or 2 was prepared by dissolving chlorinated polypropylene in a solvent comprising toluene and cyclohexane, the chlorinated polypropylene solution 3 was prepared by dissolving chlorinated polypropylene in toluene, the tris(isocyanatephenyl)thiophosphate solution was prepared by dissolving tris(isocyanatephenyl)thiophosphate in ethyl acetate, the 4,4'-diphenylmethane diisocyanate solution was prepared by dissolving 4,4'-diphenylmethane diisocynate in dichloromethane, and the modified polyisocyanate was prepared by dissolving modified polyisocyanate in ethyl acetate.

It is to be noted that the amount (part by weight) of each of the compounds shown in Tables 1 and 2 is an amount remaining after subtracting the amount of a solvent from the amount of a solution, that is, the amount (part by weight) of chlorinated polypropylene 1, 2, or 3, tris(isocyanatephenyl)thiophosphate, 4,4'-diphenylmethane diisocyanate, or modified polyisocyanate itself. The term "amount of solvent" shown in Tables 1 and 2 refers to the total amount (part by weight) of solvents contained in a resin solution.

### (Urethane-based Resin Paint)

A two-part urethane-based resin paint comprising 80 parts by weight of a diol compound ("RETAN PG80" manufactured by Kansai Paint Co., Ltd.) and 20 parts by weight of the resin solution was prepared.

### (Acrylic-based Resin Paint)

20 parts by weight of the resin solution was added to 80 parts by weight of an acrylic-based resin paint ("Magicron 1000" manufactured by Kansai Paint Co., Ltd.).

The storage stability of the resin solution and the adhesion properties of the urethane-based resin paint and the acrylic-based resin paint were measured in the following manner. The results are shown in Tables 1 and 2.

### (Storage Stability)

The resin solution was stored in an atmosphere maintained at 25°C for 2 weeks, and was then visually observed. The storage stability of the resin solution was evaluated according to the following criteria:
⊚: no change was observed after storage;
○: resin solution was slightly gelled;
Δ: resin solution was gelled; and
×: resin solution was solidified.

### (Adhesion Properties)

Oil was removed from the surface of a polypropylene plate ("Natural" manufactured by Softec, 100 mm long × 50 mm wide × 2 mm thickness) with toluene. The urethane-based resin paint or the acrylic-based resin paint was applied onto the surface of the polypropylene plate with a coating machine ("K control coater" manufactured by RK PRINT-COAT INSTRUMENT LTD., wire diameter: 310 µm (close wound, wet film thickness: 24 µm)) so that a coated film had a thickness of 24 µm just after application. The polypropylene plate with a coated film was placed in a hot air dryer maintained at 100°C for 5 minutes to bake the coated film.

After a lapse of 24 hours from the completion of baking, the adhesion properties of the coated films were measured by Cross-cut test in accordance with JIS K 5600-5-6, and were then evaluated according to the following criteria based on classification of test results defined in Table 1 in JIS K 5600-5-6.

Further, the adhesion properties of the coated films were measured in the same manner as described above except that the polypropylene plate was replaced with an olefin-based thermoplastic elastomer plate ("Santoprene 8211-65" manufactured by A.E.S. Japan Ltd.). It is to be noted that the olefin-based thermoplastic elastomer plate is expressed as "elastomer plate" in Tables 1 and 2.

⊚: class "0" or "1" defined by classification of test results
○: class "2" defined by classification of test results
×: class 3" or "4" defined by classification of test results

**Table 1**

| | | | Example 1 | Example 2 | Example 3 | Example 4 | Example 5 | Example 6 | Example 7 | Example 8 |
|---|---|---|---|---|---|---|---|---|---|---|
| Chlorinated polypropylene 1 (chlorine content: 22 % by weight) (part by weight) | | | 100 | 100 | 100 | 100 | 100 | - | - | 100 |
| Chlorinated polypropylene 2 (chlorine content: 19 % by weight) (part by weight) | | | - | - | - | - | - | - | 100 | - |
| Chlorinated polypropylene 3 (chlorine content: 22 % by weight) (part by weight) | | | - | - | - | - | - | 100 | - | - |
| Tris(isocyanatephenyl)thiophosphate (part by weight) | | | 1.6 | 1.6 | 1.4 | 4.5 | 0.8 | 1.5 | 1.6 | 1.5 |
| 4,4'-diphenylmethane diisocyanate (part by weight) | | | 15.3 | 31.3 | 3.9 | 14.8 | 16.4 | 14.5 | 15.3 | |
| Modified polyisocyanate (part by weight) | | | - | - | - | - | - | - | - | 28.5 |
| Resin solution | Amount of solvent (part by weight) | | 427.6 | 453.7 | 408.6 | 431.5 | 428.1 | 426.1 | 427.6 | 411.9 |
| | Resin composition content (% by weight) | | 21.5 | 22.7 | 20.5 | 21.7 | 21.5 | 21.4 | 21.5 | 24.0 |
| Storage stability | | | ⊚ | ○ | ⊚ | ○ | ⊚ | ⊚ | ⊚ | ⊚ |
| Adhesion properties | Urethane-based resin paint | Polypropylene plate | ⊚ | ○ | ⊚ | ○ | ○ | ⊚ | ○ | ○ |
| | | Elastomer plate | ⊚ | ○ | ⊚ | ○ | ○ | ⊚ | ○ | ○ |
| | Acrylic-based resin paint | Polypropylene plate | ⊚ | ○ | ⊚ | ○ | ○ | ⊚ | ○ | ○ |
| | | Elastomer plate | ⊚ | ○ | ⊚ | ○ | ○ | ⊚ | ○ | ○ |

**Table 2**

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Chlorinated polypropylene 1 (chlorine content: 22 % by weight) (part by weight) | | | | 100 | 100 | - | 100 | 100 | 100 |
| Chlorinated polypropylene 2 (chlorine content: 19 % by weight) (part by weight) | | | | | | | | | |
| Chlorinated polypropylene 3 (chlorine content: 22 % by weight) (part by weight) | | | | | | | | | |
| Tris(isocyanatephenyl)thiophosphate (part by weight) | | | | - | 10.2 | 100 | 0.1 | 1.8 | 17.2 |
| 4,4'-diphenylmethane diisocyanate (part by weight) | | | | 14.3 | - | 10 | 1.8 | 47.8 | 16.9 |
| Modified polyisocyanate (part by weight) | | | | - | - | - | - | - | - |
| Resin solution | | Amount of solvent (part by weight) | | 423.3 | 416.6 | 179.5 | 403.1 | 480.9 | 455.6 |
| | | Resin composition content (% by weight) | | 21.3 | 20.9 | 38.0 | 20.2 | 23.7 | 22.7 |
| Storage stability | | | | ⊚ | Δ | ⊚ | ⊚ | × | × |
| Adhesion properties | Urethane-based resin paint | | Polypropylene plate | × | × | × | × | × | × |
| | | | Elastomer plate | × | × | × | × | × | × |
| | Acrylic-based resin paint | | Polypropylene plate | × | × | × | × | × | × |
| | | | Elastomer plate | × | × | × | × | × | × |

### INDUSTRIAL APPLICABILITY

The present invention provides a resin composition to be used for improving adhesion to the surface of synthetic resins, especially olefin-based resins, and resin solution, paint, adhesive, and printing ink using such a resin composition. They are suitable for use in various applications such as automobiles, electric products, and building materials.

## Claims

1. A resin composition comprising 100 parts by weight of chlorinated polyolefin with a chlorine content of 10 to 50 % by weight, 0.01 to 10 parts by weight of tris(isocyanatephenyl)thiophosphate, and 2 to 40 parts by weight of an organic diisocyanate compound.

2. The resin composition according to claim 1, wherein the chlorine content of the chlorinated polyolefin is in the range of 14 to 40 % by weight.

3. The resin composition according to claim 1, wherein the chlorine content of the chlorinated polyolefin is in the range of 20 to 30 % by weight.

4. The resin composition according to claim 1, wherein the tris(isocyanatephenyl)thiophosphate is contained in an amount of 0.5 to 5 parts by weight per 100 parts by weight of the chlorinated polyolefin.

5. The resin composition according to claim 1, wherein the organic diisocyanate compound is contained in an amount of 3 to 30 parts by weight per 100 parts by weight of the chlorinated polyolefin.

6. The resin composition according to claim 1, wherein the organic diisocyanate compound is 4,4'-diphenylmethane diisocyanate.

7. A paint which contains the resin composition according to claim 1.

8. A resin solution which is obtained by dissolving the resin composition according to claim 1 in a solvent so that the resin composition content thereof is in the range of 10 to 40 % by weight.

9. A urethane-based resin paint which comprises the resin composition according to claim 1 and polyol.

10. An adhesive which contains the resin composition according to claim 1.

11. A printing ink which contains the resin composition according to claim 1.
